# EUROPÄISCHE PATENTANMELDUNG

(11) **EP 3 384 807 A1**
(43) Veröffentlichungstag der Anmeldung: **10.10.2018**
(21) Anmeldenummer: 18162057.6
(22) Anmeldetag: 15.03.2018
(51) Int. Cl.: A46D 3/06, A46D 3/08

(54) **BAUKASTEN ZUR HERSTELLUNG VON BÜRSTENHERSTELLUNGSMASCHINEN, BÜRSTENHERSTELLUNGSMASCHINE UND BAUREIHE VON BÜRSTENHERSTELLUNGSMASCHINEN**

(30) Priorität: 06.04.2017 DE 102017107457
(71) Anmelder: Zahoransky AG, 79674 Todtnau (DE)
(72) Erfinder: Albrecht, Christoph, 79674 Todtnau (DE); Sommer, Guido, 79677 Wembach (DE); Zeiher, Sven, 79674 Todtnau (DE); Kiefer, Joachim, 79674 Todtnau (DE)
(74) Vertreter: Börjes-Pestalozza, Henrich

(57) **Zusammenfassung**

Als Verbesserung auf dem technischen Gebiet der Herstellung von Bürstenherstellungsmaschinen (1) wird unter Anderem der Baukasten zur Herstellung von Bürstenherstellungsmaschinen (1) vorgeschlagen. Dieser modulare Baukasten umfasst dabei zumindest einen Grundmodultyp (2a) und ein Umlenkmodultyp (3a), dessen Module (2, 3) standarisierte Verbindungsschnittstellen 5 aufweisen, über die die Module (3) miteinander zu einer Bürstenherstellungsmaschine (1) koppelbar sind. Da jedes der Module (2, 3, 4) mit jedem Modul der unterschiedlichen Modultypen (2a, 3a, 4a) koppelbar ist, lässt sich mit dem Baukasten eine große Anzahl unterschiedlicher Bürstenherstellungsmaschinen (1) konfigurieren, ohne dass ein besonderer konstruktiver Aufwand dazu notwendig wäre (vgl. Fig. 5) .

## Beschreibung

Die Erfindung betrifft einen modularen Baukasten zur Herstellung von Bürstenherstellungsmaschinen, eine Bürstenherstellungsmaschine sowie eine Baureihe von Bürstenherstellungsmaschinen.

Bürstenherstellungsmaschinen sind aus dem Stand der Technik in den unterschiedlichsten Ausführungsformen bekannt. Je nach Kundenwunsch können die Bürstenherstellungsmaschinen mehrere, in der Regel fördertechnisch miteinander verbundene Einzelstationen umfassen. Die Planung und Konstruktion der Bürstenherstellungsmaschinen und ihrer einzelnen Stationen erfolgen nach den Vorgaben des Kunden. Um den in zunehmendem Maße variierenden Kundenanforderungen entsprechen zu können, kann ein beträchtlicher Aufwand zur Konstruktion und Anpassung bestehender Maschinenkonzepte notwendig sein.

Aufgabe der Erfindung ist es daher, einen modularen Baukasten, eine Bürstenherstellungsmaschine und eine Baureihe von Bürstenherstellungsmaschinen zu schaffen, die eine einfachere Herstellung kundenspezifisch konfigurierter Bürstenherstellungsmaschinen ermöglichen.

Diese Aufgabe wird durch einen modularen Baukasten zur Herstellung von Bürstenherstellungsmaschinen mit den Mitteln und Merkmalen des unabhängigen, auf einen modularen Baukasten gerichteten Anspruchs gelöst. Insbesondere wird zur Lösung dieser Aufgabe ein modularer Baukasten zur Herstellung von Bürstenherstellungsmaschinen vorgeschlagen, der zumindest einen Grundmodultyp und einen Umlenkmodultyp umfasst, wobei die Module der Modultypen des Baukastens zueinander kompatible Verbindungsschnittstellen aufweisen, über die die Module miteinander koppelbar sind, sodass mit dem Baukasten eine Vielzahl unterschiedlicher, modular aufgebauter Bürstenherstellungsmaschinen herstellbar ist.

Ein Grundmodul kann in diesem Zusammenhang ein einzelnes Modul der modular aufgebauten Bürstenherstellungsmaschine sein, das einzelne Baugruppen der Bürstenherstellungsmaschine zusammenfasst und dem bestimmte Funktionseinheiten zur Durchführung von Bearbeitungs- und/oder Handhabungsschritten zugeordnet sind, die bei der Bürstenherstellung benötigt werden. Zu diesen Funktionseinheiten können zum Beispiel Materialeinleger, Materialkästen, Stopfeinheiten, Bearbeitungs- oder Endbearbeitungseinheiten oder -aggregate sowie Reinigungs-, Veredelungs- und Qualitätsüberwachsungseinheiten gehören.

Die Funktionen eines Materialeinlegers können das Speichern von Filamentpucks, das sogenannte Entmanteln dieser Pucks, das heißt das Entfernen einer die Borstenfilamente zusammenfassenden Kunststoffbanderole, und das Vereinzeln bzw. Einlegen der Borstenfilamente in einen angekoppelten Materialkasten sein.

Die Materialkästen speichern einzelne Filament-Bündel, die aus automatisch oder händisch eingelegten Pucks in die sog. Kanäle der Materialkästen eingeschoben werden.

Als Bearbeitungs- oder Endbearbeitungseinheiten oder Endbearbeitungsaggregate können zum Beispiel Fräßaggregate und/oder Taumelschleifer oder auch andere Schleifaggregate zum Einsatz kommen.

Ein Umlenkmodul kann in diesem Zusammenhang ein einzelnes Modul der modular aufgebauten Bürstenherstellungsmaschine sein, mit dem eine Änderung einer Transportrichtung von Werkstücken bei ihrem Transport zwischen den und/oder durch die einzelnen Module einer Bürstenherstellungsmaschine bewirkt werden kann.

Aus dem modularen Baukasten mit seinen zumindest zwei unterschiedlichen Modultypen, nämlich einem Grundmodultyp und einem Umlenkmodultyp, lassen sich unterschiedliche Bürstenherstellungsmaschinen ohne großen Konstruktionsaufwand kundenspezifisch zusammenstellen. Dies erhöht die Flexibilität der Herstellung von Bürstenherstellungsmaschinen bei zumindest gleichbleibendem oder gar reduziertem Konstruktions- und Installationsaufwand. Die Module eines Modultyps sind standardisiert, können also im Wesentlichen den gleichen Grundaufbau aufweisen., Sie lassen sich den gestellten Kundenanforderungen entsprechend aus dem Baukasten auswählen und zu einer Bürstenherstellungsmaschine zusammenfügen.

Durch eine Kombination der in dem Baukasten vorgesehenen Modultypen lassen sich verschiedenste Maschinenkonzepte zusammenstellen. Dabei können die unterschiedlichen Bürstenherstellungsmaschinen dieser Maschinenkonzepte untereinander eine deutlich höhere Gleichteilequote aufweisen, da die Kommunalitätsmöglichkeiten der Bauteile und/oder Baugruppen steigen. So können bestimmte Bauteile oder Baugruppen an unterschiedlichen Modultypen mehrfach verwendet werden, wo bislang mehrere unterschiedliche Bauteile oder Baugruppen notwendig waren. Durch weniger Varianten vorzuhaltender Bauteile und Baugruppen können Komplexitätskosten der Bürstenherstellungsanlagen sinken, wodurch sich marktfähigere Preise realisieren lassen. Aufgrund der geringeren Anzahl unterschiedlicher Bauteile und/oder Baugruppen kann auch der Lageraufwand beim Hersteller der Bürstenherstellungsmaschinen reduziert sein.

Vorteilhaft kann es sein, wenn die Verbindungsschnittstellen an Verbindungsseiten der Module der verschiedenen Modultypen angeordnet sind. Besonders bevorzugt können die Verbindungsseiten zweier in gekoppelter Gebrauchsstellung benachbarter Module einander zugewandt sein. Auf diese Weise können die Verbindungsschnittstellen an Verbindungsseiten angeordnet sein, die zwischen unmittelbar benachbarten Modulen einer aus dem Baukasten konfektionierten Bürstenherstellungsmaschine angeordnet sind. Auf diese Weise können die Verbindungsschnittstellen zuverlässig vor einer Beschädigung und/oder Manipulation geschützt angeordnet werden.

Der Aufwand zur Installation einer aus dem Baukasten konfektionierten Bürstenherstellung kann verringert werden, wenn die Module der unterschiedlichen Modultypen an ihren Verbindungsschnittstellen miteinander, insbesondere hilfsmittelfrei oder rein manuell, koppelbare Kopplungselemente aufweisen. Mit diesen Kopplungselementen können die Module mechanisch, elektrisch, elektronisch, insbesondere datentechnisch, pneumatisch und/oder hydraulisch miteinander koppelbar sein.

Die Verwendung von Kopplungselementen hat dabei den Vorteil, dass, insbesondere dann, wenn die Kopplungselemente als Steckverbindungen ausgebildet sind, der Aufwand beim Koppeln der Module vergleichsweise gering ausfallen kann. Dabei können die Kopplungselemente, insbesondere die elektrischen und/oder elektronischen Kopplungselemente derart ausgebildet sein, dass der Aufbau einer Bürstenherstellungsmaschine aus dem Baukasten ohne eine aufwändige Verkabelung und gegebenenfalls ohne einen Anlagenelektroniker oder -elektriker erfolgen kann. Auf diese Weise lässt sich nicht nur der Aufbau einer aus dem Baukasten konfektionierten Bürstenherstellungsmaschine, sondern auch ein Austausch einzelner Module aus der aus mehreren Modulen bestehenden Bürstenherstellungsmaschine vereinfachen.

Vorzugsweise können die miteinander koppelbaren Kopplungselemente an den Verbindungsseiten der Module der unterschiedlichen Modultypen in Anzahl und/oder Anordnung übereinstimmen. Damit kann eine standardisierte Belegung der Verbindungsseiten der Module mit Kopplungselementen erzielt werden. Dies kann die Kopplung einzelner Module untereinander zusätzlich vereinfachen.

Die Kopplungselemente sind vorzugsweise reversibel lösbar miteinander koppelbar, sodass ein Entkoppeln zweier Module, beispielsweise zum Austausch eines Moduls, ohne großen Aufwand erfolgen kann.

Ein Grundmodul des Grundmodultyps kann jeweils zumindest eine Einbauschnittstelle zur Bestückung des Grundmoduls mit Funktionseinheiten aufweisen. Es kann ferner vorgesehen sein, dass ein Grundmodul des Grundmodultyps derart ausgestaltet ist, dass es mehrere, vorzugsweise zueinander identische, Einbauschnittstellen zur Bestückung des Moduls mit Funktionseinheiten aufweist. Diese Einbauschnittstellen können an unterschiedlichen Positionen an dem Grundmodul, insbesondere an einem Grundrahmen des Grundmoduls angeordnet und gegebenenfalls auch an diesem verschieblich sein.

Die eine oder mehreren Einbauschnittstellen eines Moduls können abhängig von den Kundenanforderungen mit unterschiedlichen Funktionseinheiten bestückt werden. Als Funktionseinheiten kommen dabei zum Beispiel Bündelstopfeinheiten mit oder ohne Materialkasten, Bearbeitungseinheiten, beispielsweise Fräsaggregate und/oder Taumelschleifer, Materialeinleger und/oder Eingabe- und Entnahmeeinheiten zum Eingeben und Entnehmen von Borstenträgern und/oder fertigen Bürsten zum Einsatz.

Die Grundmodule eines Grundmodultyps können vorzugsweise hinsichtlich der Anordnung und/oder Auswahl der Einbauschnittstellen identisch zueinander sein. Ferner ist es möglich, dass eine Einbauschnittstelle mit unterschiedlichen, insbesondere zumindest mit einzelnen der zuvor erwähnten, Funktionseinheiten bestückt wird oder ist. Auf diese Weise können die Grundmodule eines Grundmodultyps zwar hinsichtlich ihres Grundaufbaus standarisiert sein, was die zuvor erwähnten Komplexitätskosten senken hilft. Trotz des hohen Maßes an Standardisierung ist mit derartig ausgestalteten Grundmodulen eines Grundmodultyps eine hohe Anzahl unterschiedlicher Konfigurationen der Grundmodule realisierbar. Dies kann die Flexibilität des Baukastens zur Herstellung unterschiedlicher Bürstenherstellungsmaschinen und zur Befriedigung verschiedenster Kundenanforderungen erhöhen.

Wie zuvor bei einem Grundmodul eines Grundmodultyps kann es auch bei einem Umlenkmodul des Umlenkmodultyps vorgesehen sein, dass ein solches jeweils zumindest eine Einbauschnittstelle oder mehrere, insbesondere zueinander identische, Einbauschnittstellen zur Bestückung des Moduls mit Funktionseinheiten aufweist. Auch hier können die Einbauschnittstellen zur Bestückung mit unterschiedlichen Funktionseinheiten, wie sie bereits zuvor erwähnt wurden, eingerichtet sein.

Besonders Vorteilhaft ist es, wenn die Einbauschnittstellen, die bei einem Grundmodul eines Grundmodultyps zum Einsatz kommen, identisch sind mit den Einbauschnittstellen, die bei den Umlenkmodulen eines Umlenkmodultyps zum Einsatz kommen. Auf diese Weise lassen sich vorhandene Funktionseinheiten zwischen den Modulen auswechseln.

Die Flexibilität in der Herstellung von Bürstenherstellungsmaschinen aus dem Baukasten lässt sich weiter erhöhen, wenn der Baukasten zumindest einen Zwischenmodultyp umfasst. Ein Zwischenmodul des Zwischenmodultyps muss nicht, kann aber einbauschnittstellenfrei ausgebildet sein und/oder eine im Vergleich zu einem Grundmodul des Grundmodultyps abweichende Modullänge aufweisen. An einem derartigen Zwischenmodul können dann beispielsweise manuelle Bearbeitungsvorgänge vorgenommen oder aber auch Kontroll- oder Qualitätssicherungsmaßnahmen an den über das Zwischenmodul transportierten Werkstücken, insbesondere beborsteten oder teilbeborsteten Borstenträgern durchgeführt werden.

Wenn die Zwischenmodule eine im Vergleich zu den Grundmodulen des Grundmodultyps abweichende Modullänge aufweisen, eignen sie sich zudem auch dazu, eine Bürstenherstellungsmaschine auf einfache und unkomplizierte Weise an bauliche Gegebenheiten am Aufstellort der Bürstenherstellungsmaschine anzupassen. Auch bei dem Zwischenmodultyp sind Verbindungsschnittstellen an Verbindungsseiten der Zwischenmodule vorgesehen, die es erlauben, Zwischenmodule vom Zwischenmodultyp mit anderen Zwischenmodulen oder anderen Modulen anderer Modultypen einfach miteinander zu verbinden.

Bereits zuvor wurde ausgeführt, dass Grundmodule und/oder Umlenkmodule des Grundmodultyps beziehungsweise des Umlenkmodultyps mit Eingabe- und Entnahmeeinheiten als Funktionseinheiten bestückt werden können. Vorteilhaft kann es aber auch sein, wenn der Baukasten zumindest einen Einlege- und/oder Entnahmemodultyp umfasst. Ein Einlege- und/oder Entnahmemodul des Einlege- und/oder Entnahmemodultyps kann zumindest eine Zuführ- und/oder Entnahmeeinheit zum Zuführen und/oder Entnehmen von Material, insbesondere von Borstenträgern und/oder Bürstenkörpern aufweisen. Hierbei ist es beispielsweise möglich, einen Einlege- und/oder Entnahmemodultyp, an dessen Einlege- und/Entnahmemodulen eine automatisierte Zuführ- und/oder Entnahmeeinheit vorgesehen ist und einen manuellen Einlege- und/oder Entnahmemodultyp vorzuhalten, um unterschiedliche Anforderungsprofile bei der Konfektionierung von Bürstenherstellungsmaschinen bedienen zu können.

Die Module der unterschiedlichen Modultypen des Baukastens können jeweils zumindest eine Führung für eine die Module fördertechnisch verbindende Transporteinrichtung für mit der Bürstenherstellungsmaschine zu bearbeitende Werkstücke aufweisen. Bei einer solchen Transporteinrichtung kann es sich beispielweise um eine Transportkette aus einer Mehrzahl miteinander verbundener Transporteinheiten für Borstenträger handeln.

In diesem Zusammenhang sei erwähnt, dass der Baukasten zumindest einen Transporteinrichtungstyp mit, insbesondere in ihrer Anzahl, frei koppelbaren Transporteinheiten zur Herstellung von Transporteinrichtungen, mit denen die Module einer aus dem Baukasten hergestellten Bürstenherstellungsmaschine fördertechnisch verbindbar sind, aufweisen kann. Auf diese Weise lassen sich aus dem Baukasten nicht nur nahezu beliebige Modulkombinationen zusammenstellen, sondern vielmehr können die einzelnen Module einer aus dem Baukasten zusammengestellten Bürstenherstellungsmaschine aus dem Baukasten heraus auch mit einer maßgeschneiderten, dennoch standarisierten und daher vergleichsweise einfach zu konfigurierenden Transporteinrichtung versehen werden.

Bei einem Umlenkmodul des Umlenkmodultyps kann vorgesehen sein, dass ein solches jeweils wenigstes eine gebogene und/oder abgewinkelte Führung für eine Transporteinrichtung aufweist. Eine solche Führung kann beispielsweise eine Führungsschiene oder auch eine Führungsnut sein. Mit einer derartig gebogenen und/oder abgewinkelten Führung kann die Transporteinrichtung, je nach Ausgestaltung der Führung insbesondere um 45 Grad, 90 Grad oder 180 Grad, umgelenkt werden. Derartige Führungen können auch an Einlege- und /oder Entnahmemodulen des Einlege- und/oder Entnahmemodultyps vorgesehen sein.

Insbesondere bei einer um 180° umgelenkten Führung können ein Eintrittsquerschnitt und ein Austrittsquerschnitt einer Führung eines Umlenkmoduls oder auch eines Einlege- und/oder Entnahmemoduls an einer Verbindungsseite des jeweiligen Moduls angeordnet oder ausgebildet sein. Auf diese Weise eignen sich Umlenkmodule des Umlenkmodultyps und Einlege- und/oder Entnahmemodule zum Umlenken des Werkstückflusses durch die einzelnen Module der aus dem Baukasten konfektionierten Bürstenherstellungsmaschine. Bei einer entsprechenden Anordnung von derartigen Umlenkmodulen oder auch Einlege- und/oder Entnahmemodulen kann mithilfe der Führungen der einzelnen Module eine geschlossen umlaufende Transportbahn für die Transporteinrichtung gebildet werden.

Insbesondere bei einem Grundmodul des Grundmodultyps und/oder einem Zwischenmodul des Zwischenmodultyps können jeweils zumindest zwei Führungen vorgesehen sein. Diese Führungen können an dem jeweiligen Modul zueinander beabstandet und/oder parallel zueinander ausgerichtet sein. Eintrittsquerschnitte und Austrittsquerschnitte der Führungen eines solchen Moduls können auf unterschiedlichen Verbindungsseiten, insbesondere auf gegenüberliegenden Verbindungsseiten des jeweiligen Moduls angeordnet sein. Auf diese Weise kann durch eine erste der wenigstens zwei Führungen eines Moduls die Transporteinheit in der einen Richtung über das Modul oder durch das Modul geleitet werden. Nach Passieren zumindest eines nachgelagerten Umlenkmoduls kann die Transporteinrichtung dann durch die zweite der wenigstens zwei Führungen eines Moduls durch das oder über das Modul zurückgeführt werden.

Vorteilhaft kann es sein, wenn die Führungen mit ihren Austrittsquerschnitten bei in Gebrauchsstellung befindlichen Modulen in die Eintrittsquerschnitte der Führungen unmittelbar benachbarter Module münden. Auf diese Weise lässt sich die bereits zuvor erwähnte geschlossene Transportbahn mit Führungen der standardisierten Module der unterschiedlichen Modultypen bilden. So kann, unabhängig davon, aus welchen einzelnen Modulen die Bürstenherstellungsmaschine aus dem Baukasten konfektioniert wurde, auf diese Weise eine nahezu beliebig lange Transportbahn aus den einzelnen Führungen gebildet werden.

Eine geschlossen umlaufende Transportbahn kann bei einer Bürstenherstellungsmaschine erzielt werden, die aus zumindest einem Grundmodul und zwei Umlenkmodulen oder aus zumindest einem Grundmodul und einem Umlenkmodul und einem Einlege- und/oder Entnahmemodul mit einer entsprechenden Umlenkführung oder abgewinkelten oder gebogenen Führung zusammengesetzt ist.

Die Lagerhaltungskosten und auch die Varianz- und/oder Komplexitätskosten können besonders niedrig gehalten werden, wenn die Module eines Grundmodultyps denselben Grundaufbau, insbesondere denselben Grundrahmen und/oder dieselbe Einhausung aufweisen. Gleiches kann für die Umlenkmodule eines Umlenkmodultyps, die Zwischenmodule eines Zwischenmodultyps und/oder die Einlege- und/oder Entnahmemodule eines Einlege- und/oder Entnahmemodultyps gelten.

Die Installation der einzelnen Module zu einer Bürstenherstellungsmaschine kann besonders einfach sein, wenn die Module der unterschiedlichen Modultypen jeweils als autonom betreibbare Einheiten ausgebildet sind. Hierbei kann vorgesehen sein, dass die Module die für ihren Betrieb erforderlichen elektrischen und/oder elektronischen Installationen aufweisen. Derartige elektrische Installationen können beispielsweise Leistungs- und/oder Steuerungseinheiten sein oder umfassen.

Zudem ist es vorteilhaft, wenn die Module der unterschiedlichen Modultypen des Baukastens vollständig elektrisch verkabelt und/oder mit hydraulischen und/oder pneumatischen Leitungen ausgestattet sind. Dies hat den besonderen Vorteil, dass selbst eine bestehende, aus dem Baukasten konfektionierte Bürstenherstellungsmaschine ohne großen Aufwand und ohne aufwändige Installationen bei Bedarf verändert werden kann. Hier ist es zum Beispiel denkbar, das Layout der Bürstenherstellungsmaschine durch Hinzufügen oder Entfernen einzelner Module zu verändern.

Da jedes der Module auf diese Weise eine abgeschlossene und für sich funktionstüchtige Einheit bildet, kann die Erweiterung oder auch der Rückbau einer aus dem Baukasten zusammengestellten Bürstenherstellungsmaschine vergleichsweise einfach erfolgen.

Die zuvor genannte Aufgabe wird auch durch eine Bürstenherstellungsmaschine mit den Mitteln und Merkmalen auf eine Bürstenherstellungsmaschine gerichteten unabhängigen Anspruchs gelöst. Insbesondere wird zur Lösung der Aufgabe eine Bürstenherstellungsmaschine vorgeschlagen, die aus Modulen eines Baukastens, insbesondere eines erfindungsgemäßen Baukastens hergestellt ist. Dadurch, dass die Bürstenherstellungsmaschine aus Modulen eines Baukastens hergestellt ist, lassen sich unterschiedlichste Kundenanforderungen erfüllen und unterschiedlichste Maschinenzusammenstellungen und Maschinenlayouts mit vertretbarem Aufwand realisieren. Durch die zuvor ausführlich beschriebene Standarisierung insbesondere der Verbindungsschnittstellen zwischen den einzelnen Modulen der unterschiedlichen Modultypen kann der Installationsaufwand auch bei großen Bürstenherstellungsmaschinen, die eine Vielzahl von einzelnen Modulen umfassen, vergleichsweise klein gehalten werden.

Bei einer Konfiguration der Bürstenherstellungsmaschine, die aus dem Baukasten gewonnen werden kann, kann vorgesehen sein, dass die Bürstenherstellungsmaschine aus zumindest einem Umlenkmodul und zumindest einem Grundmodul zusammengesetzt ist. Ferner kann vorgesehen sein, dass außer dem zumindest einen Umlenkmodul und dem zumindest einen Grundmodul ein weiteres Umlenkmodul und/oder ein Einlege- und/oder Entnahmemodul des Einlege- und/oder Entnahmemodultyps vorgesehen ist, das vorzugsweise eine gebogene oder abgewinkelte Führung zum Umlenken einer Transporteinrichtung auch auf oder an diesem Modul aufweist. Auf diese Weise kann eine Bürstenherstellungsmaschine geschaffen werden, die eine aus einzelnen Führungen der jeweiligen Module zusammengesetzte, geschlossen umlaufende Transportbahn für eine Transporteinrichtung aufweist.

Wie bereits zuvor ausgeführt, können die Führungen der Module der Bürstenherstellungsmaschine für eine Transporteinrichtung, mit der Werkstücke, insbesondere Borstenträger oder Bürstenkörper, zwischen den einzelnen Modulen transportiert werden können, bei miteinander gekoppelten Modulen die geschlossen umlaufende Transportbahn bilden. Auf dieser Transportbahn kann die Transporteinrichtung umlaufen. Bei der Transporteinrichtung kann es sich um eine Transportkette handeln, die aus miteinander, insbesondere gelenkig, verbundenen Transporteinheiten besteht.

Die eingangs genannte Aufgabe wird auch durch eine Baureihe von Bürstenherstellungsmaschinen mit den Mitteln und Merkmalen des auf die Baureihe gerichteten unabhängigen Anspruchs gelöst. Insbesondere ist dabei vorgesehen, dass die Baureihe aus zumindest zwei unterschiedlichen Bürstenherstellungsmaschinen, wie sie in den Ansprüchen und im vorherigen Text beansprucht und beschrieben wurden, besteht. Die Bürstenherstellungsmaschinen können sich dabei beispielweise in der Zusammenstellung ihrer Module, in der Anzahl einzelner Module und/oder in der Bestückung einzelner Module mit Funktionseinheiten voneinander unterscheiden.

Nachstehend sind Ausführungsbeispiele der Erfindung anhand der Zeichnung näher beschrieben. Es sei erwähnt, dass die Erfindung nicht auf diese gezeigten Ausführungsbeispiele beschränkt ist. Weitere Ausführungsbeispiele ergeben sich durch Kombination der Merkmale einzelner oder mehrerer Ansprüche untereinander und/oder mit einzelnen oder mehreren Merkmalen der Ausführungsbeispiele. Es zeigen in zum Teil stark schematisierter Darstellung:
- Fig. 1: Eine Draufsicht auf ein Grundmodul vom Grundmodultyp des Baukastens, wobei an einer Oberseite des Grundmoduls zwei parallel zueinander angeordnete Führungen mit einer ausschnittsweise dargestellten Transporteinrichtung sowie zwei Funktionseinheiten zu erkennen sind,
- Fig. 2: eine weitere Darstellung eines im Vergleich zu Figur 1 um 180° gedrehten Grundmoduls,
- Fig. 3: eine erste Konfiguration einer Bürstenherstellungsmaschine einer erfindungsgemäßen Baureihe, die aus unterschiedlichen Modulen des Baukastens hergestellt ist,
- Fig. 4 - 8: weitere Ausführungsbeispiele unterschiedlicher Bürstenherstellungsmaschinen, die derselben Baureihe von Bürstenherstellungsmaschinen angehören, die wiederum mittels ein und desselben Baukastens hergestellt sind.

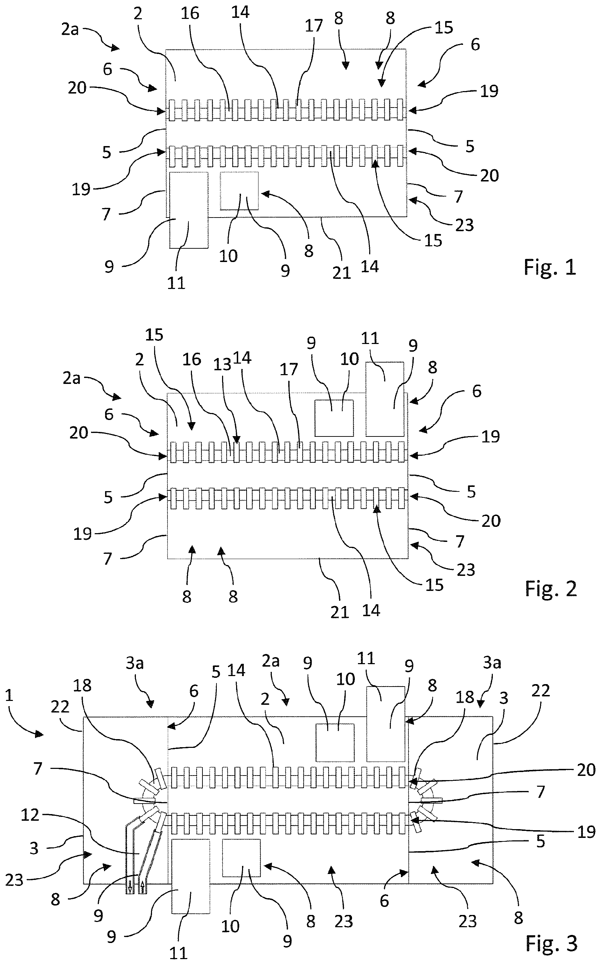

Die Figuren 3 bis 8 zeigen unterschiedliche Ausführungsbeispiele von jeweils im Ganzen mit 1 bezeichneten Bürstenherstellungsmaschinen, die einer Baureihe von Bürstenherstellungsmaschinen angehören.

Sämtliche in den Figuren 3 bis 8 dargestellten Bürstenherstellungsmaschinen 1 sind dabei aus Modulen des Baukastens hergestellt.

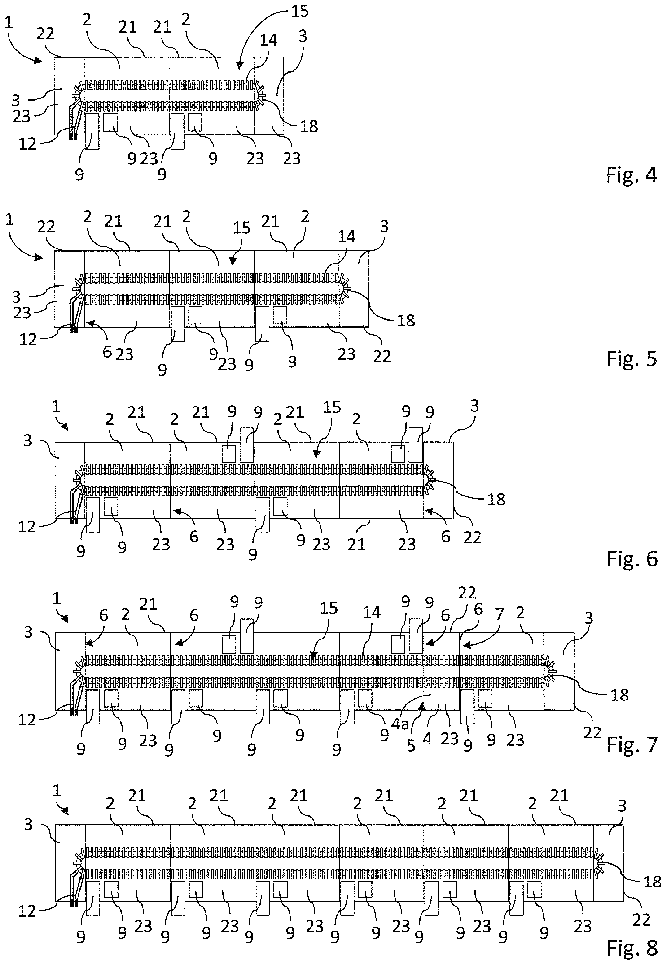

Der modulare Baukasten, aus dem die einzelnen Bürstenherstellungsmaschinen 1 hergestellt sind, umfasst einen Grundmodultyp 2a und einen Umlenkmodultyp 3a. Ferner ist ein Zwischenmodultyp 4a vorgesehen, dessen Zwischenmodule 4 (vergleiche Figur 7) eine im Vergleich zu den Grundmodulen 2 des Grundmodultyps 2a abweichende Modullänge haben. Die Modullänge der Zwischenmodule 4 des Zwischenmodultyps 4a ist dabei kleiner als die der Grundmodule 2 und entspricht in etwa denen der Umlenkmodule 3.

Sämtliche Modultypen 2a, 3a, 4a des Baukastens haben zueinander kompatible Verbindungsschnittstellen 5. Über diese Verbindungsschnittstellen 5 sind die Module der unterschiedlichen Modultypen 2a, 3a, 4a miteinander koppelbar. Auf diese Weise kann mit dem Baukasten eine Vielzahl unterschiedlicher, modular aufgebauter Bürstenherstellungsmaschinen 1, wie sie zur Veranschaulichung der Baureihe in den Figuren 3 bis 8 dargestellt sind, hergestellt werden.

Die Verbindungsschnittstellen 5 sind an Verbindungsseiten 6 der unterschiedlichen Module 2, 3, 4 angeordnet oder ausgebildet. Bei einem Grundmodul 2 des Grundmodultyps 2a sind die Verbindungsschnittstellen 5 an gegenüberliegenden und voneinander abgewandten Verbindungsseiten 6 angeordnet. Gleiches gilt für die Zwischenmodule 4 des Zwischenmodultyps 4a. Die Grundmodule 2 und die Zwischenmodule 4 haben jeweils also zwei Verbindungsseiten 6, sodass sie beidseitig jeweils mit einem anschließenden Modul 2, 3, 4 verbunden werden können.

Die Umlenkmodule 3 vom Umlenkmodultyp 3a, die in den Figuren 3 bis 8 jeweils ganz außen dargestellt sind, weisen jeweils nur eine Verbindungsseite 6 auf, an der Verbindungschnittstellen 5 zur Kopplung der Umlenkmodule 3 mit anderen Modulen vor allem der Modultypen 2a, 3a angeordnet sind.

Die Figuren 3 bis 8 verdeutlichen, dass die Verbindungsseiten 6 zweier in gekoppelter Gebrauchsstellung benachbarter Module 2, 3, 4 einander zugewandt sind.

Die Module 2, 3, 4 der unterschiedlichen Modultypen weisen an ihren Verbindungsschnittstellen 5 in Anzahl und Anordnung übereinstimmende, miteinander koppelbare Kopplungselemente 7 auf. Mithilfe dieser Kopplungselemente 7 können die unterschiedlichen Module 2, 3, 4 mechanisch, elektrisch, elektronisch, insbesondere datentechnisch, pneumatisch und/oder hydraulisch miteinander verbunden oder gekoppelt werden.

Dabei kann die Kopplung der einzelnen Module 2, 3, 4 mithilfe der Kopplungselemente 7 vorzugsweise reversibel lösbar sein. Die Grundmodule 2 des Grundmodultyps weisen im vorliegenden Ausführungsbeispiel jeweils vier Einbauschnittstellen 8 auf. Diese Einbauschnittstellen 8 dienen zur Bestückung der Grundmodule 2 mit Funktionseinheiten 9.

Bei dem in Figur 3 dargestellten Ausführungsbeispiel eines Grundmoduls 2 sind sämtliche der insgesamt vier Einbauschnittstellen 8 mit Funktionseinheiten 9 bestückt. Zwei der Einbauschnittstellen 8 sind mit Bündelstopfeinheiten 10 als Funktionseinheiten 9 versehen. Die Bündelstopfeinheiten 10 umfassen neben einem Stopfwerkzeug auch einen Materialkasten zur Zuführung von Borstenfilamenten. Die übrigen Einbauschnittstellen 8 des in Figur 3 dargestellten Grundmoduls 2 sind mit Materialeinlegern 11 als Funktionseinheiten 9 bestückt. Die Materialeinleger 11 Speichern zum beispielsweise Filamentpucks und ermöglichen das sogenannte Entmanteln dieser Pucks. Darunter ist ein Entfernen einer die Borstenfilamente in Puckform haltenden Kunststoffbanderole zu verstehen. Mithilfe der Materialeinleger 11 können die Borstenfilamente vereinzelt und an den in Gebrauchsstellung angekoppelten Materialkasten der Bündelstopfeinheit 10 übergeben werden.

Die vorhandenen Einbauschnittstellen 8 an einem Grundmodul 2 sind zueinander identisch. Auf diese Weise kann jede der vorhandenen Einbauschnittstellen 8 mit unterschiedlichen oder auch mit denselben Funktionseinheiten 9 bestückt werden. Dies erhöht die Flexibilität des Baukastens zur Herstellung von Bürstenherstellungsmaschinen 1.

Neben Bündelstopfeinheiten 10 und Materialeinlegern 11 können als Funktionseinheiten 9 beispielsweise auch Bearbeitungseinheiten, Materialkästen und/oder Eingabe- und Entnahmeeinheiten 12 zum Einsatz kommen. Derartige Eingabe- und Entnahmeeinheiten 12 sind beispielsweise an den in den Figuren 3 bis 8 auf der linken Seite dargestellten Umlenkmodulen 3 angeordnet. Somit weisen auch die Umlenkmodule 3 des Umlenkmodultyps 3a jeweils zumindest eine Einbauschnittstelle 8 auf, die mit einer Funktionseinheit 9, hier mit einer Eingabe- und/oder Entnahmeeinheit 12 bestückt werden kann.

Die Eingabe- und/oder Entnahmeeinheit 12 dient zum Eingeben und/oder Entnehmen von Werkstücken, hier Borstenträgern 13 in den Bearbeitungsprozess, der jeweils innerhalb der Bürstenherstellungsmaschinen 1 und den einzelnen Modulen 2, 3, 4 abläuft. Anstelle von oder in Ergänzung eines Umlenkmoduls 3 mit einer Eingabe- und/oder Entnahmeeinheit 12 kann auch ein in den Figuren nicht gesondert dargestelltes Einlege- und/oder Entnahmemodul eines entsprechenden Modultyps zum Einsatz kommen.

Im Vergleich zu den Grundmodulen 2 des Grundmodultyps 2a und den Umlenkmodulen 3 des Umlenkmodultyps 3a des Baukastens sind die Zwischenmodule 4 des Zwischenmodultyps 4a einbauschnittstellenfrei ausgebildet. Sie können zum Beispiel zur Distanzüberbrückung zwischen einzelnen Modulen 2, 3, 4 oder auch als Platz zur manuellen Nachbearbeitung der durch die Bürstenherstellungsmaschine 1 bearbeiteten Werkstücke dienen. Neben den zuvor erwähnten unterschiedlichen Modultypen 2a, 3a, 4a weist der Baukasten auch den zuvor erwähnten Einlege- und/oder Entnahmemodultyp auf. Einlege- und/oder Entnahmemodule dieses Modultyps sind in den Figuren nicht gesondert dargestellt. Sie kommen vor allem dann zum Einsatz, wenn eine Bürstenherstellungsmaschine 1 mit aufwändigen automatisierten Zuführvorrichtungen und Entnahmevorrichtungen ausgestattet werden soll. Ein Einlege- und/oder Entnahmemodul dieses Modultyps weist eine Querschnittsfläche auf, die in etwa der eines Grundmoduls 2 des Grundmodultyps 2a entsprechen kann. Bei den Einlege- und/oder Entnahmemodulen dieses Modultyps ist vorgesehen, dass diese zumindest eine Zuführ- und/oder Entnahmeeinheit zum Zuführen und/oder Entnehmen von Material, insbesondere von Borstenträgern und/oder Bürstenkörpern und/oder fertigen Bürsten aufweist. Eine derartige Zuführ- und/oder Entnahmeeinheit kann beispielsweise ein Trayloader sein oder auch ein Schwingförderer oder dergleichen Zuführvorrichtung sein.

Die einzelnen Module der unterschiedlichen Modultypen 2a, 3a, 4a sind jeweils mit zumindest einer Führung 14 oder 18 für eine die Module 2, 3, 4 einer Bürstenherstellungsmaschine 1 fördertechnisch verbindende Transporteinrichtung 15 ausgestattet. Die Transporteinrichtung 15, die bei den unterschiedlichen Bürstenherstellungsmaschinen 1, wie sie in den Figuren 3 bis 8 dargestellt sind, zu erkennen ist, ist eine Transportkette 16 aus einer Mehrzahl miteinander verbundener Transporteinheiten 17. An jeder Transporteinheit 17 ist jeweils ein Borstenträger 13 angeordnet und wird mithilfe der als Transportkette 16 ausgebildeten Transporteinrichtung 15 der jeweiligen Bürstenherstellungsmaschine 1 zwischen den Modulen 2, 3, 4 der Bürstenherstellungsmaschine 1 bewegt. Auch die in den Figuren dargestellte Transporteinrichtung 15 ist modular aufgebaut und kann aus dem Baukasten gewonnen werden. Zu diesem Zweck weist der Baukasten zumindest einen Transporteinrichtungstyp auf. Der Transporteinrichtungstyp umfasst in ihrer Anzahl frei koppelbare Transporteinheiten 17. Mithilfe des Baukastens und des Transporteinrichtungstyps lassen sich somit aus den frei koppelbaren Transporteinheiten 17 unterschiedlich lange Transporteinrichtungen 15 für unterschiedlich große Bürstenherstellungsmaschinen 1 einer Baureihe, wie sie beispielsweise in den Figuren 3 bis 8 dargestellt sind, konfektionieren. Mithilfe der Transporteinrichtungen 15 lassen sich die Module 2, 3, 4 einer aus dem Baukasten hergestellten Bürstenherstellungsmaschine 1 fördertechnisch verbinden.

Die in den Figuren dargestellten Umlenkmodule 3 des Umlenkmodultyps 3a, aber auch Einlege- und Entnahmemodule des Einlege- und/oder Entnahmemodultyps weisen jeweils wenigstens eine gebogene Führung 18 auf. Mithilfe der gebogenen Führungen 18 lassen sich die unterschiedlichen Transporteinrichtungen 15 der Bürstenherstellungsmaschinen 1 gemäß den Ausführungsbeispielen in den Figuren um 180° umlenken. Dadurch, dass die in den Figuren 3 bis 8 dargestellten Bürstenherstellungsmaschinen 1 jeweils zwei Umlenkmodule 3 mit derartigen Führungen 18 aufweisen, lassen sich die Führungen 14 und 18 zu einer geschlossenen Transportbahn zusammensetzen, auf der Transporteinrichtung 15 in Form einer endlosen Transportkette 16 geschlossen umläuft.

Bei den Umlenkmodulen 3 ist vorgesehen, dass ein Eintrittsquerschnitt 19 und ein Austrittsquerschnitt 20 einer Führung 18 eines Umlenkmoduls 3 jeweils an derselben Verbindungsseite 6 des jeweiligen Umlenkmoduls 3 angeordnet oder ausgebildet sind.

Wie bereits zuvor ausgeführt, weisen die Grundmodule 2 des Grundmodultyps 2a und auch die Zwischenmodule 4 des Zwischenmodultyps 4a jeweils zumindest zwei Führungen 14 auf. Diese beiden Führungen 14 der jeweiligen Module 2, 4 sind zueinander beabstandet und zudem parallel zueinander ausgerichtet. Die Eintrittsquerschnitte 19 und die Austrittsquerschnitte 20 der einzelnen Führungen 14 sind auf unterschiedlichen Verbindungsseiten 6 des jeweiligen Moduls 2, 4, nämlich konkret auf gegenüberliegenden, voneinander abgewandten Verbindungsseiten 6 des jeweiligen Moduls 2, 4 angeordnet. Auf diese Weise lässt sich eine Transporteinrichtung 15 in Form einer Transportkette 16 durch eine der beiden Führungen 14 eines Moduls 2, 4 in der einen Richtung durch oder über das Modul 2, 4 lenken und mithilfe der zweiten Führung 14 in der entgegengesetzten Richtung über das jeweilige Modul 2, 4 zurückführen.

Die Module 2, 3, 4 der unterschiedlichen Modultypen 2a, 3a, 4a des Baukastens lassen sich derart miteinander verbinden und koppeln, dass ihre Führungen 14, 18 mit ihren Austrittsquerschnitten 20 bei in Gebrauchsstellung befindlichen Modulen 2, 3, 4 in die Eintrittsquerschnitte 19 der Führungen 14, 18 unmittelbar benachbarter Module 2, 3, 4 münden. So werden die Führungen 14, 18 der Module 2, 3, 4 der unterschiedlichen Modultypen des Baukastens zu der geschlossenen Führungsbahn oder Transportbahn, die in den Figuren 3 bis 8 gut zu erkennen ist, miteinander verbunden.

Sämtliche in den Figuren dargestellten Bürstenherstellungsmaschinen 1 sind aus zumindest einem Grundmodul 2 und zwei Umlenkmodulen 3, zwischen denen das zumindest eine Grundmodul 2 angeordnet ist, zusammengesetzt.

Bei anderen Ausführungsbeispielen der Bürstenherstellungsmaschinen 1, die mit den Baukasten hergestellt werden können, können diese aus zumindest einem Grundmodul 2 und einem Umlenkmodul 3 sowie einem in den Figuren nicht gesondert dargestellten Einlege- und/oder Entnahmemodul zusammengesetzt sein.

Eine Besonderheit des Baukastens besteht darin, dass die Module 2, 3, 4 eines Modultyps immer denselben Grundaufbau, insbesondere denselben Grundrahmen 21, 22 aufweisen. Die Standarisierung kann noch weiter vorangetrieben werden, wenn die jeweiligen Module 2, 3, 4 der unterschiedlichen Grundmodultypen auch dieselbe Einhausung aufweisen, wobei dann die unterschiedlichen Einhausungen der unterschiedlichen Modultypen 2a, 3a, 4a selbstverständlich miteinander kompatibel sind, um einen erweiterbaren, eingehausten Bearbeitungsraum der herzustellenden Bürstenmaschine 1 zu schaffen.

Während die Grundmodule 2 ein und denselben Grundrahmen 21 aufweisen, sind die Umlenkmodule 3 mit einem entsprechend gestalteten, hier im Vergleich zu dem Grundrahmen 21 der Grundmodule 2 kleineren Grundrahmen 22 ausgestattet. Aufgrund ihrer vergleichbaren Größe weisen die Umlenkmodule 3 und die Zwischenmodule 4 denselben Typ Grundrahmen 22 auf (vergleiche Fig. 7). Abweichungen von diesem Prinzip sind jedoch möglich.

Die innerhalb eines oder an einem Grundrahmen 21, 22, vorgesehenen Einbauschnittstellen 8 sind innerhalb des Baukastens standardisierte Schnittstellen. So kann ein Grundrahmen 21, 22 eines Moduls 2, 3, 4 variabel mit unterschiedlichen Funktionseinheiten 9 bestückt werden. Im Regelfall kann ein Grundmodul 2, insbesondere wenn es als Endbearbeitungsmodul im Mittelteil einer Bürstenherstellungsmaschinen 1 eingesetzt wird, mit einer Bündelstopfeinheit 10 und einer weiteren Funktionseinheit 9, beispielsweise einer Bearbeitungseinheit oder einer Endbearbeitungseinheit, bestückt werden. Es ist aber auch möglich und wie in den Figuren 3 und 7 dargestellt, an einem Grundmodul 2 des Grundmodultyps 2a aufgrund der insgesamt vorhandenen Einbauschnittstellen 8 an dem Grundrahmen 21 auch zwei Bündelstopfeinheiten 10 und zwei weitere Funktionseinheiten 9, beispielsweise Endbearbeitungseinheiten oder Materialeinleger 11 vorzusehen.

Die Module 2, 3, 4 der unterschiedlichen Modultypen sind jeweils als autonom betreibbare Einheiten ausgebildet. Das bedeutet, dass die Module 2, 3, 4 die für ihren Betrieb erforderlichen elektrischen/elektronischen Installationen 23 aufweisen. Diese Installationen 23 umfassen dabei, sofern für die Funktion des jeweiligen Moduls 2,3,4 erforderlich, auch Leistungs- und/oder Steuerungseinheiten.

Zudem sind die Module 2, 3, 4 im Auslieferzustand vollständig elektrisch verkabelt und gegebenenfalls mit hydraulischen und/oder pneumatischen Leitungen und Anschlüssen ausgestattet. Eine Installation und Inbetriebnahme einer aus den unterschiedlichen Modulen 2, 3, 4 des Baukastens hergestellten Bürstenherstellungsmaschine 1 ist daher ohne großen Aufwand und ohne das Verlegen von elektrischen Leitungen möglich. Dies insbesondere dann, wenn als Kopplungselemente 7 entsprechende Steckverbindungen zum Einsatz kommen, über die die einzelnen Module 2, 3, 4 auch schaltungstechnisch miteinander verbunden werden können.

Wie bereits zuvor ausgeführt, bilden die Führungen 14, 18 der Module 2, 3, 4 einer jeden der in den Figuren 3 bis 8 dargestellten Bürstenherstellungsmaschinen 1 eine geschlossene Transportbahn. Auf dieser Transportbahn kann die Transporteinrichtung 15 der Bürstenherstellungsmaschine 1 zum Transport von Werkstücken, nämlich hier Borstenträgern 13 oder Bürstenkörpern, zwischen den einzelnen Modulen 2, 3, 4 und durch oder über diese umlaufen. Die Transporteinrichtung 15 umfasst zu einer Transportkette 16 gelenkig miteinander verbundene Transporteinheiten 17. Eine Modullänge der Grundmodule 2 ist dabei so bemessen, dass in einer der beiden Führungen 14 eines jeden Grundmoduls 2 gleichzeitig 19 Transporteinheiten 17 der Transportkette 16 angeordnet werden können. Somit stehen zweimal 19 Bearbeitungsplätze innerhalb eines Grundmoduls 2 zur Verfügung.

Die Transporteinheiten 17 sind dabei frei koppelbar, sodass eine Transportkette 16 in nahezu beliebiger Länge als Transporteinrichtung 15 an die gewählte Konfiguration der Bürstenherstellungsmaschine 1 angepasst werden kann.

Als Verbesserung auf dem technischen Gebiet der Herstellung von Bürstenherstellungsmaschinen 1 wird unter anderem der Baukasten zur Herstellung von Bürstenherstellungsmaschinen 1 vorgeschlagen. Dieser modulare Baukasten umfasst dabei zumindest einen Grundmodultyp 2a und einen Umlenkmodultyp 3a, dessen Module 2, 3 standarisierte Verbindungsschnittstellen 5 aufweisen, über die die Module 3 einfach miteinander zu einer Bürstenherstellungsmaschine 1 koppelbar sind. Da jedes der Module 2, 3, 4 mit jedem Modul der unterschiedlichen Modultypen 2a, 3a, 4a aus dem Baukasten koppelbar ist, lässt sich mit dem Baukasten eine große Anzahl unterschiedlicher Bürstenherstellungsmaschinen 1 konfigurieren, ohne dass ein besonderer konstruktiver Aufwand dazu notwendig wäre.

### Bezugszeichenliste

- 1: Bürstenherstellungsmaschine
- 2: Grundmodul
- 2a: Grundmodultyp
- 3: Umlenkmodul
- 3a: Umlenkmodultyp
- 4: Zwischenmodul
- 4a: Zwischenmodultyp
- 5: verbindungsschnittstellen
- 6: Verbindungsseite
- 7: Kopplungselemente
- 8: Einbauschnittstelle
- 9: Funktionseinheit
- 10: Bündelstopfeinheit
- 11: Materialeinleger
- 12: Eingabe- Entnahmeeinheit
- 13: Borstenträger
- 14: Führung
- 15: Transporteinrichtung
- 16: Transportkette
- 17: Transporteinheit
- 18: gebogene Führung
- 19: Eintrittsquerschnitt von 14, 18
- 20: Austrittsquerschnitt von 14, 18
- 21: Grundrahmen von 2
- 22: Grundnahmen von 3
- 23: elektrische/elektronische Installation

## Patentansprüche

1. Modularer Baukasten zur Herstellung von Bürstenherstellungsmaschinen (1) umfassend zumindest einen Grundmodultyp (2a) und einen Umlenkmodultyp (3a), wobei die Module (2, 3, 4) der Modultypen (2a,3a,4a) des Baukastens zueinander kompatible Verbindungsschnittstellen (5) aufweisen, über die die Module (2,3,4) miteinander koppelbar sind, sodass mit dem Baukasten eine Vielzahl unterschiedlicher, modular aufgebauter Bürstenherstellungsmaschinen (1) herstellbar ist.

2. Baukasten nach Anspruch 1, **dadurch gekennzeichnet, dass** die Verbindungsschnittstellen (5) an Verbindungsseiten (6) der Module (2,3,4) der unterschiedlichen Modultypen (2a,3a,4a) angeordnet sind, vorzugsweise wobei die Verbindungsseiten (6) zweier in gekoppelter Gebrauchsstellung benachbarter Module (2,3,4) einander zugewandt sind.

3. Baukasten nach Anspruch 1 oder 2, **dadurch gekennzeichnet, dass** die Module (2,3,4) der unterschiedlichen Modultypen (2a,3a,4a) an ihren Verbindungsschnittstellen (5), vorzugsweise in Anzahl und/oder Anordnung übereinstimmende, miteinander koppelbare Kopplungselemente (7) aufweisen, mit denen die Module (2,3,4) mechanisch, elektrisch, elektronisch, insbesondere datentechnisch, pneumatisch und/oder hydraulisch miteinander, vorzugsweise reversibel lösbar, koppelbar sind.

4. Baukasten nach einem der vorhergehenden Ansprüche, **dadurch gekennzeichnet, dass** ein Grundmodul (2) des Grundmodultyps (2a) und/oder dass ein Umlenkmodul (3) des Umlenkmodultyps (3a) jeweils zumindest eine Einbauschnittstelle (8) oder mehrere, insbesondere zueinander identische, Einbauschnittstellen (8) zur Bestückung der Module (2) mit Funktionseinheiten (9) aufweist/aufweisen, insbesondere zur Bestückung mit zumindest einer Bündelstopfeinheit (10) und/oder mit zumindest einer Bearbeitungseinheit und/oder mit zumindest einem Materialeinleger (11) und/oder mit zumindest einem Materialkasten und/oder mit zumindest einer Eingabe- und Entnahmeeinheit (12) zum Eingeben und Entnehmen von Borstenträgern (13) und/oder fertigen Bürsten.

5. Baukasten nach einem der vorhergehenden Ansprüche, **dadurch gekennzeichnet, dass** der Baukasten zumindest einen Zwischenmodultyp (4a) umfasst, vorzugsweise wobei ein Zwischenmodul (4) des Zwischenmodultyps (4a) einbauschnittstellenfrei ausgebildet ist und/oder eine im Vergleich zu einem Grundmodul (2) des Grundmodultyps (2a) abweichende Modullänge aufweist, und/oder dass der Baukasten zumindest einen Einlege- und/oder Entnahmemodultyp umfasst, wobei ein Einlege- und/oder Entnahmemodul des Einlege- und/oder Entnahmemodultyps zumindest eine Zuführ- und/oder Entnahmeeinheit zum Zuführen und/oder Entnehmen von Material, insbesondere von Borstenträgern und/oder Bürstenkörpern und/oder fertigen Bürsten aufweist.

6. Baukasten nach einem der vorhergehenden Ansprüche, **dadurch gekennzeichnet, dass** die Module der unterschiedlichen Modultypen (2a,3a,4a) jeweils zumindest eine Führung (14) für eine die Module (2,3,4) fördertechnisch verbindende Transporteinrichtung (15) aufweisen, insbesondere für eine Transportkette (16) aus einer Mehrzahl miteinander verbundener Transporteinheiten (17) für Borstenträger (13).

7. Baukasten nach einem der vorhergehenden Ansprüche, **dadurch gekennzeichnet, dass** der Baukasten zumindest einen Transporteinrichtungstyp mit, insbesondere in ihrer Anzahl, frei koppelbaren Transporteinheiten (17) zur Herstellung von Transporteinrichtungen (15) aufweist, mit denen die Module (2,3,4) einer aus dem Baukasten hergestellten Bürstenherstellungsmaschine (1) fördertechnisch verbindbar sind.

8. Baukasten nach einem der vorhergehenden Ansprüche, **dadurch gekennzeichnet, dass** ein Umlenkmodul (3) des Umlenkmodultyps (3a) und/oder ein Einlege- und/oder Entnahmemodul eines oder des Einlege- und/oder Entnahmemodultyps jeweils wenigstens eine gebogene und/oder abgewinkelte Führung (18) aufweist/aufweisen, mit dem die Transporteinrichtung (15), insbesondere um 45 Grad, 90 Grad oder 180 Grad, umlenkbar ist, vorzugsweise wobei ein Eintrittsquerschnitt (19) und ein Austrittsquerschnitt (20) einer Führung (18) des Umlenkmoduls (3) an einer Verbindungsseite (6) des Umlenkmoduls (3) und/oder wobei ein Eintrittsquerschnitt (19) und ein Austrittsquerschnitt (20) einer Führung (14,18) des Einlege- und/oder Entnahmemoduls an einer Verbindungsseite (6) des Einlege- und/oder Entnahmemoduls angeordnet oder ausgebildet sind.

9. Baukasten nach einem der vorhergehenden Ansprüche, **dadurch gekennzeichnet, dass** ein Grundmodul (2) des Grundmodultyps (2a) und/oder ein Zwischenmodul (4) des Zwischenmodultyps (4a) jeweils zumindest zwei Führungen (14) aufweisen, die zueinander beabstandet und/oder parallel sind und deren Eintrittsquerschnitte (19) und Austrittsquerschnitte (20) auf unterschiedlichen Verbindungsseiten (6), insbesondere auf gegenüberliegenden Verbindungsseiten (6) des jeweiligen Moduls (2,4) angeordnet sind.

10. Baukasten nach einem der vorhergehenden Ansprüche, **dadurch gekennzeichnet, dass** die Führungen (14,18) mit ihren Austrittsquerschnitten (20) bei in Gebrauchsstellung befindlichen Modulen (2,3,4) in die Eintrittsquerschnitte (19) der Führungen (14,18) unmittelbar benachbarter Module (2,3,4) münden und/oder dass die Führungen (14, 18) der Module (2,3,4) der Modultypen (2a,3a,4a) des Baukastens zu einer geschlossenen Transportbahn miteinander verbindbar sind, insbesondere bei einer Bürstenherstellungsmaschine (1), die aus zumindest einem Grundmodul (2) und zwei Umlenkmodulen (3) oder aus zumindest einem Grundmodul (2) und einem Umlenkmodul (3) und einem Einlege - und/oder Entnahmemodul zusammengesetzt ist.

11. Baukasten nach einem der vorhergehenden Ansprüche, **dadurch gekennzeichnet, dass** die Grundmodule (2) eines Grundmodultyps (2a) denselben Grundaufbau, insbesondere denselben Grundrahmen (21) und/oder dieselbe Einhausung aufweisen, und/oder dass die Umlenkmodule (3) eines Umlenkmodultyps (3a) denselben Grundaufbau, insbesondere denselben Grundrahmen (22) und/oder dieselbe Einhausung aufweisen, und/oder dass die Zwischenmodule (4) eines Zwischenmodultyps (4a) denselben Grundaufbau, insbesondere denselben Grundrahmen (22) und/oder dieselbe Einhausung aufweisen, und/oder dass die Einlege- und/oder Entnahmemodule eines Einlege- und/oder Entnahmemodultyps denselben Grundaufbau, insbesondere denselben Grundrahmen und/oder dieselbe Einhausung aufweisen.

12. Baukasten nach einem der vorhergehenden Ansprüche, **dadurch gekennzeichnet, dass** die Grundmodule (2) des Grundmodultyps (2a), die Zwischenmodule (4) des Zwischenmodultyps (4a), die Einlege- und/oder Entnahmemodule eines Einlege- und/oder Entnahmemodultyps und/oder die Umlenkmodule (3) des Umlenkmodultyps (3a) jeweils als autonom betreibbare Einheiten ausgebildet sind, insbesondere wobei die Module (2,3,4) für ihren Betrieb erforderliche elektrische/elektronische Installationen (23), insbesondere Leistungs- und/oder Steuerungseinheiten, aufweisen oder umfassen und/oder vollständig elektrisch verkabelt und/oder mit hydraulischen und/oder pneumatischen Leitungen ausgestattet sind.

13. Bürstenherstellungsmaschine (1) hergestellt aus Modulen (2, 3, 4) eines Baukastens, insbesondere eines Baukastens nach einem der vorhergehenden Ansprüche.

14. Bürstenherstellungsmaschine (1) nach Anspruch 13, **dadurch gekennzeichnet, dass** die Bürstenherstellungsmaschine (1) aus zumindest einem Umlenkmodul (3) und aus zumindest einem Grundmodul (2) zusammengesetzt ist, vorzugsweise wobei die Bürstenherstellungsmaschine (1) zumindest ein weiteres Umlenkmodul (3) und/oder ein Einlege- und/oder Entnahmemodul umfasst und wobei das zumindest eine Grundmodul (2) zwischen den beiden Umlenkmodulen (3) oder zwischen einem Umlenkmodul (3) und einem Einlege- und Entnahmemodul angeordnet ist.

15. Bürstenherstellungsmaschine (1) nach Anspruch 13 oder 14, **dadurch gekennzeichnet, dass** Führungen (14,18) der Module (2, 3, 4) für eine Transporteinrichtung (15) der Bürstenherstellungsmaschine (1), mit der Werkstücke, insbesondere Borstenträger (13) oder Bürstenkörper, zwischen den einzelnen Modulen (2,3,4) transportierbar sind, bei miteinander gekoppelten Modulen (2,3,4) eine geschlossene umlaufende Transportbahn bilden, auf der die Transporteinrichtung (15) umläuft.

16. Bürstenherstellungsmaschine (1) nach einem der Ansprüche 13 bis 15, **dadurch gekennzeichnet, dass** die Transporteinrichtung (15) eine Transportkette (16) aus miteinander, insbesondere gelenkig, verbundenen Transporteinheiten (17) ist.

17. Baureihe aus zumindest zwei unterschiedlichen Bürstenherstellungsmaschinen (1) nach einem der Ansprüche 13 bis 16.
